# EUROPEAN PATENT SPECIFICATION

(11) **EP 0 287 979 B1**
(45) Date of publication and mention of the grant of the patent: **21.09.1994**
(21) Application number: 88106114.7
(22) Date of filing: 16.04.1988
(51) Int. Cl.: G01S 7/28, G01S 13/10, G01S 13/32

(54) **Coherent radar altimeter system**
Kohärentes Radarhöhenmess-System
Système altimétrique comportant un radar cohérent

(30) Priority: 20.04.1987 US 40436
(43) Date of publication of application: 26.10.1988
(73) Proprietor: HONEYWELL INC., Minneapolis Minnesota 55408 (US)
(72) Inventor: Bjorke, Merlin D., Minneapolis, MN 55418 (US); Thue, Baard H., Lino Lakes, MN 55014 (US)
(74) Representative: Rentzsch, Heinz, Dipl.-Ing.

(56) References cited:
- FR-A- 1 248 549
- US-A- 3 333 266
- US-A- 3 397 398
- US-A- 3 981 013
- US-A- 4 005 420
- M.I. SKOLNIK: "Introduction to radar systems", 1962, McGRAW-HILL, Tokyo, JP,pages 106-111

## Description

The invention relates to radar systems and in particular to radar altimeters.

US-A 3 981 013 describes a radar system for transmitting and receiving a plurality of signals of different frequencies to prevent the possibility of jamming the system. Two signals of different frequency are radiated simultaneously, and the echo signals are received in two receiver channels centered on frequencies identical with the transmitted frequencies. The two received signals are then mixed to derive an intermediate frequency which is again mixed with a local oscillator signal, whereupon range and tracking information can be derived. The transmitter section of this radar system comprises an exciter for generating RF pulses of variable pulse width having a frequency of 30 MHz, which is mixed with the 170 MHz signal of a local oscillator. An upper side band selector connected to the output of the mixer selects the upper side band of 200 MHz. The output of this selector is then coupled to the inputs of two further mixers, where the 200 MHz signals are combined with the output signal of a carrier frequency oscillator having a center frequency of 5,5 GHz so that the outputs from those two mixers each contain signals of 5,3 GHz and 5,7 GHz. Side band selectors connected to the outputs of the two mixers feed those 5,7 GHz and 5,3 GHz signals, respectively, to a transmitter amplifier, which combines the two signals into one for simultaneous transmission while still maintaining their separate frequency identity. The output of the transmitter amplifier is connected via a transmit/receive-switch to the antenna.

US-A 3 397 398 describes a Doppler range measuring system, wherein the Doppler signal is derived by the simultaneous transmission to the target of two CW (continuous wave) signals having a small fixed frequency difference. The two CW signals are pulsed so that the on-time is equal to the time required for the radio signal to travel from the transmitter to the maximum range and back to the receiver. The off-time is made long relative to the on-time so that echos from targets at most ranges beyond the desired range will not be detected and indicated. The reflected and received signals are mixed with the transmitted signals to derive the Doppler shift frequency signals for the two different radio signals. The phase difference between the two Doppler signals is then measured.

The present invention provides a radar altimeter, wherein the two transmitted pulse signals of different frequency have a fixed phase relationship to each other, i.e. are coherent.

Coherent radar systems are sensitive to the phase consistency of the received echoes. Radar echoes from an extended surface, such as the surface of the earth, are such that, for a radar carried by a moving platform, the relative phase of the radio frequency (RF) pulses in a sequential pulse train rapidly decorrelate. For this reason use of coherent radar for aircraft altimeters has been heretofore impractical. At the same time coherent systems offer advantages of consequence in terms of low peak transmitter power (enabling the use of solid state RF transmitters at C-band) and relative immunity to spurious signals. In particular, these advantages would be significant in a precision altimeter based upon coherent pulse operation. For example, operation to 15 km and higher necessitates coherent operation in order to utilize solid state transmitters of reasonable cost. But prior art proposals for coherent pulsed radar altimeters have not been satisfactory. As mentioned above, return signal phase decorrelation caused by a Doppler shift as a result of platform motion and phase shifts due to topological irregularities within the return surface area has made coherent pulse altimeters using narrow bandwidth receivers impractical.

The object of this invention is a pulsed decorrelation tolerant coherent radar altimeter. This object is achieved by the invention as characterized in claim 1. The invention furthermore discloses a novel digital coherent pulse generator primarily for use in a narrow band coherent radar altimeter.

Briefly, this invention contemplates the provision of a coherent pulse radar which transmits a pulse comprised of the sum of at least two phase related RF signals closely spaced in frequency. The phase shift due to platform motion and return surface irregularity of the return signal is approximately the same for each carrier. The receiver produces a signal representative of the difference of the two carriers, which is substantially free of decorrelation effects, and which can be processed in a narrow band receiver using otherwise prior art techniques to produce the desired range information. Preferred embodiments of the invention are described in the dependent claims. The invention and its preferred details will be explained by reference to the attached drawings, in which:
- Figure 1: is a block diagram of one embodiment of a coherent pulsed altimeter;
- Figure 2: is a block diagram of a pulse generator for use in the system of Figure 1;
- Figure 3: is a schematic block diagram of a novel pulse generation using digital techniques to generate a coherent radar pulse having two RF carriers for use in the system;
- Figure 4a through 4h: are a series of signal diagrams useful in explaining the operation of Figure 3.

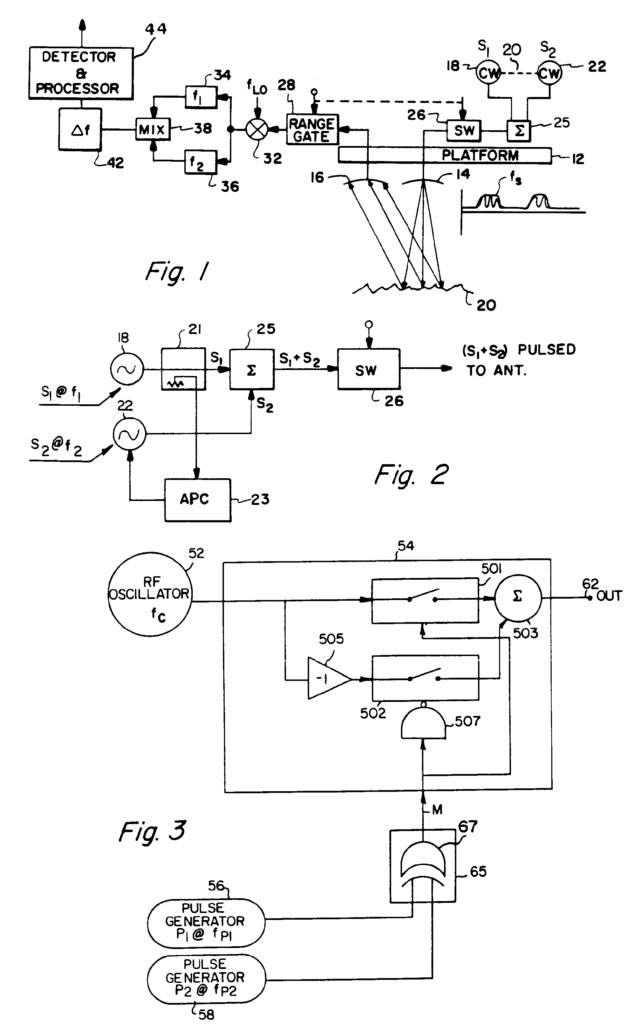

Referring now to Figure 1, a moving platform 12, such as an aircraft moving from right to left, carries a pair of antennas 14 and 16, respectively a transmitting and a receiving antenna. A coherent RF pulse generator is connected to the transmitter antenna 14.

By way of explanation, the transmitter may comprise a pair of continuous wave oscillators 18 and 22 generating signals at two closely adjacent RF carrier frequencies f₁ and f₂. The oscillators 18 and 22 should be maintained in a fixed phase relationship to one another as indicated by dash line connection 20. This may be accomplished by any suitable manner known to those skilled in the art. Figure 2 illustrates one technique for making source 18 and 22 provide signals S₁ and S₂, respectively, which are coherent with respect to each other.

In Figure 2, an RF coupler 21 and a automatic phase control circuit 23 cross-couple two closely adjacent high frequency signal sources 18 and 22 to produce two phase related signals:$\text{S₁ = E₁ cos (2πf₁t + φ₁)}$
and$\text{S₂ = E₂ cos (2πf₂t + φ₂).}$

Signals S₁ and S₂ are coupled as inputs to an RF signal adder 25 whose output is coupled to a pulse forming switch 26. The output signal to antenna 14 is a series of RF pulses with an RF carrier signal equal to the sum of two coherent signals S₁ and S₂ having RF frequency f₁ and f₂ respectively.

In practice, the problem of providing two satisfactory coherent carriers at reasonable costs is difficult to solve using conventional techniques, such as shown in Figures 1 and 2. For this reason the novel generator of Figure 3 is preferred and will be described in detail following the description of Figure 1.

The resultant radar output signal, produced by the circuit of Figures 1 and 2 is a series of high frequency radar pulses sampled from a coherent signal representable by:

### Equation A

$\text{K = cos (w₁t + φ₁) + cos (w₂t + φ₂)}$
where:
K = radar signal
w₁ = 2πf₁
w₂ = 2πf₂
φ₁ & φ₂ = phase angles

The radar signal output K is equivalent to the simultaneous sum of two coherent high frequency signals.

The reflected signal from surface 20 as illustrated in Figure 1, such as the surface of the earth, is received by an antenna 16 and coupled to the input of a conventional range gate 28.

A mixer 32 mixes the output of range gate 28 with a suitably chosen carrier f_{LO} and the resultant signal is coupled to a pair of filters 34 and 36 centered respectively at the translated frequencies chosen for f₁ and f₂, and having a bandwidth equal to the anticipated Doppler span (i.e., range of frequency shift anticipated as a result of platform motion).

Another mixer 38 mixes the output signals from the filters 34 and 36. This combined signal is coupled to a narrow band filter 42 whose frequency is centered on the difference frequency between carrier signal frequencies f₁ and f₂, and whose bandwidth is commensurate with the information base band bandwidth. The output of this narrow band filter 42 is coupled to a suitable radar information detection and processing system 44, known in the art, from which range information is extracted.

In the operation of the invention, the wavelength of radio waves at a radio altimeter frequency of 4.3 GHz is about 69,5 mm. The amplitude correlation distance δ is dependent on the RF wavelength and has been estimated as:

### Equation B

$\text{δ =} \frac{\text{3,8 λ}}{\text{4 π v}} \text{·} \sqrt{\frac{\text{h}}{\text{C·τ}}}$
- λ: = RF wavelength
- v: = ground speed
- h: = altitude above surface
- τ: = pulse width
- C: = velocity of light

By transmitting two coherent RF carrier signals of closely spaced frequency, simultaneously, for each pulse, the effective RF wavelength is artificially increased. Upon reflection from the surface and reception by the receiver in two IF-channels, the two signals are mixed together and the altitude tracker operates on the resulting difference frequency signal whose phase variation with distance is diminished by the factor:

### Equation C

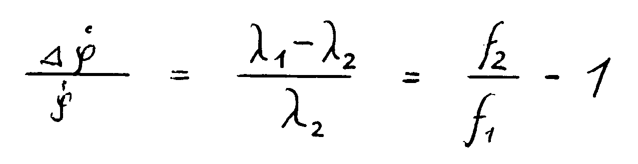

For Example, at frequencies$\text{f₁ = 4.3 x 10⁹}$
and$\text{f₂ = 4.3 x 10⁹ + 6 x 10⁴}$
the phase rate factor is$\text{13.9 x 10⁻⁶}$

Figure 3 illustrates a novel, digitally constructed, two coherent carrier, phase coded, signal source in accordance with the present invention. Shown in Figure 3 is a single RF oscillator 52 whose output is fed through a digitally driven phase inverting switch 54. The digitally driven switch 54 is driven by a pair of phase related pulse generators 56 and 58.

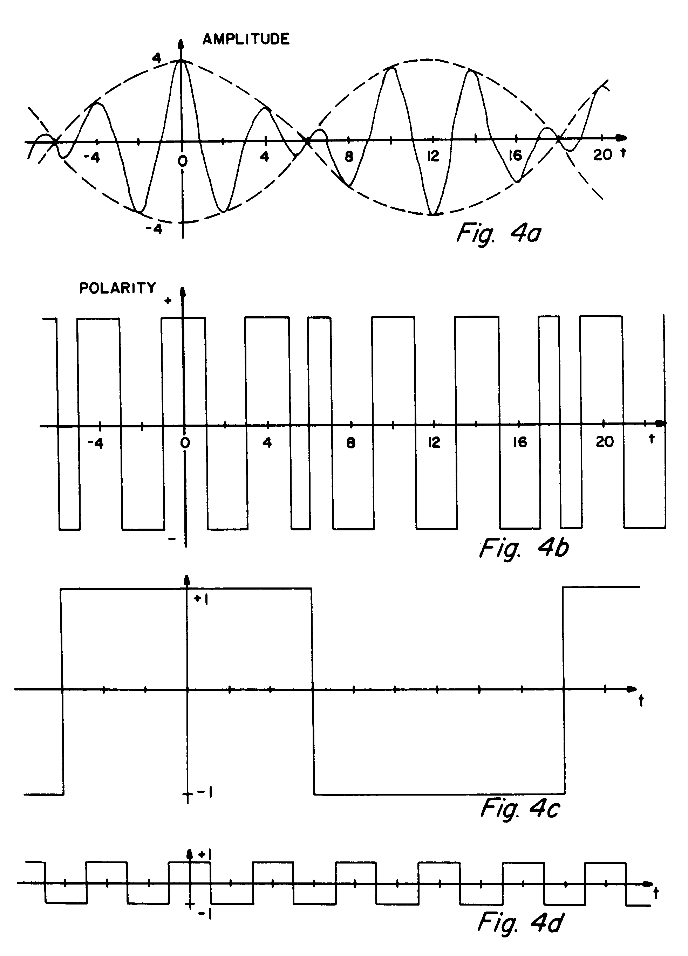

Generator 56 produces a continuous pulse train signal P₁ having pulse repetition frequency fₚ₁, and generator 58 produces continuous pulse train signal P₂ having pulse repetition frequency fₚ₂. Pulse signals P₁ and P₂ are graphically illustrated in Figure 4c and 4d respectively. The phase related signals P₁ and P₂ may be constructed by a variety of techniques including digital counters and dividers driven by and synchronized with a common clock signal.

The output of digitally controlled switch 54 is a signal having a pair of phase related signal components at frequencies fₚ₁ and fₚ₂ with a controllable relative phase. Signals P₁ and P₂ are presented to a digital multiplier 65 for generating a product signal M which will be subsequently described. Signal M provides the control signal for digitally driven modulator switch 54.

Switch 54 is known as a bi-phase modulator. Switch 54 may be constructed by a variety of techniques including appropriate application and control of a mixer as taught in RF SIGNAL PROCESSING COMPONENTS CATALOG of Watkins - Johnson Co., 1985/86, p. 66. In Figure 3, switch 54 is illustrated using simply a pair of transmission gates 501 and 502. The output signal of RF oscillator 52, having frequency f_{c} is passed through transmission gate 501 upon a positive logic state signal M. The output of transmission gate 501 is presented to a summing circuit 503. Further, the output of RF oscillator 52 is presented to transmission gate 502 through a phase inverting circuit 505. Transmission gate 502 is controlled by signal M passed through an inverting circuit 507. The output of transmission gate 502 is presented as a second signal to summing circuit 503. The signal from oscillator 52 will reach output 62 either via switch 501 or 502, never both at the same time, as determined by signal M. The output of summing circuit 503 is indicated as signal 62. The output signal 62, as will be subsequently described, is substantially the same as the output of adder circuit 25 illustrated in Figures 1 and 2. To understand to operation of the circuit of Figure 3, reference again is made to the circuit of Figure 1 and its RF signal envelope as illustrated in Figure 4a.

The resultant signal spectrum of the radar signal generator of Figure 1 has frequency components at frequencies f₁ and f₂ with a frequency difference therebetween directly related to the frequency difference between the sources 18 and 22. The desired radar signal having frequency components at frequencies f₁ and f₂ is again represented by Equation A, namely:$\text{K = cos (w₁t + φ₁) + cos (w₂t + φ₂)}$

This may be converted via trigonometric manipulation into:

### Equation D

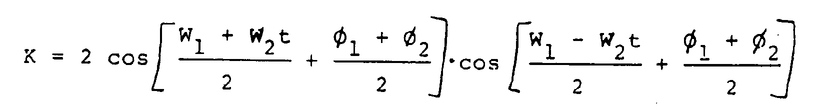

Figure 4a illustrates the envelope of radar signal K, in accordance with the present invention, where the radar signal is comprised of the sum of phase related carrier signals of differing frequency. Figure 4a shows the envelope of radar signal K excluding any pulsing caused by switch 26. The exemplary waveform illustrated in Figure 4a is one in which the ratio of the two frequencies of the two signals is six to one, and where the phase of the two signals is φ₁ = φ₂ = 0 .

Radar signal K, as will be readily appreciated from the form of Equation D, can be generated by the product modulation of two signals having frequencies (f₁ + f₂)/2 and (f₁ - f₂)/2, respectively.

Figure 4b illustrates the conversion of the signal envelope Figure 4a into a switched waveform. In Figure 4b, the switch point phase of Figure 4a is preserved but the amplitude is held constant. Figure 4b therefore represents a phase modulation control signal M:$\text{M = signum (K).}$

The desired radar signal illustrated in Figure 4a is synthesized in the present invention by phase modulating an RF carrier signal in accordance with the polarity of the phase modulation signal M or another signal indicative thereof. It will be appreciated by those skilled in the art that the waveform of Figure 4b is the product of the waveforms shown in Figure 4c and 4d which are representative of pulse train signals P₁ and P₂.

Referring again to Figure 3, digital pulse generators 56 and 58 are presented to digital multiplier 65 to digitally construct the digital equivalent of modulation signal M. One example of digital multiplier 65 is illustrated in Figure 3 as an exclusive-or circuit 67. The output of digital multiplier 67, signal M, is presented to bi-phase modulating switch 54.

In operation, switch circuit 54 of Figure 3: (i) passes the signal of RF oscillator 52 to switch output 62 in response to one state of the output of digital multiplier 65, and (ii) passes 180° phase inverted signal of RF oscillator 52 to switch output 62 in response to a second state of the output of digital multiplier 65. The resulting signal output 62 is a signal substantially equivalent as that provided by the output of summing circuit 25 of Figure 2. That is, the output radar signal of the circuit of Figure 3 is a radar signal comprised of the sum of two phase related signals with different frequencies as shown in Figures 4b, c and d, but translated in frequency to be centered around the frequency f_{c} of oscillator 52 in Figure 3.

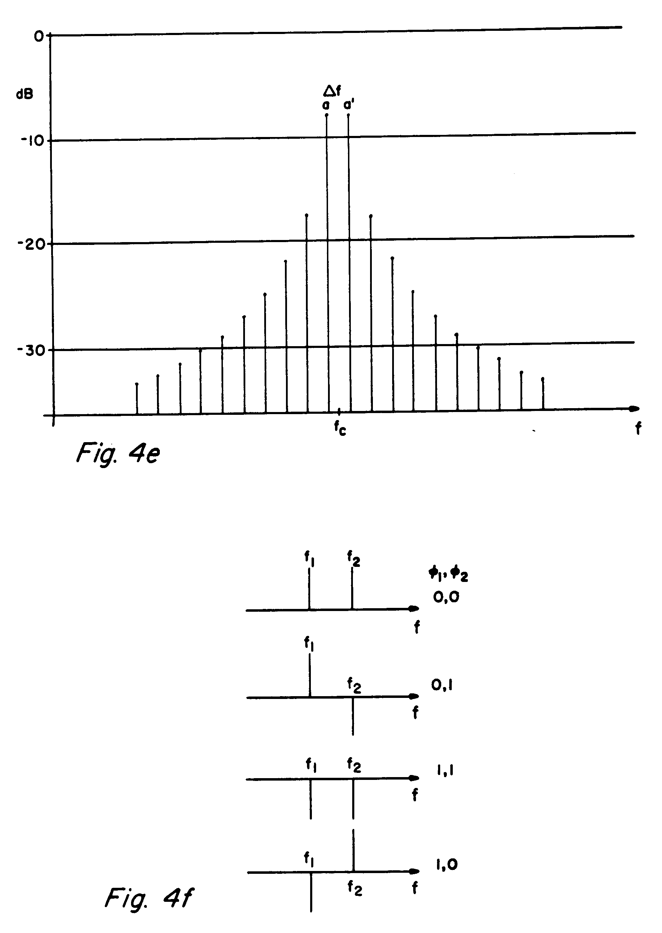

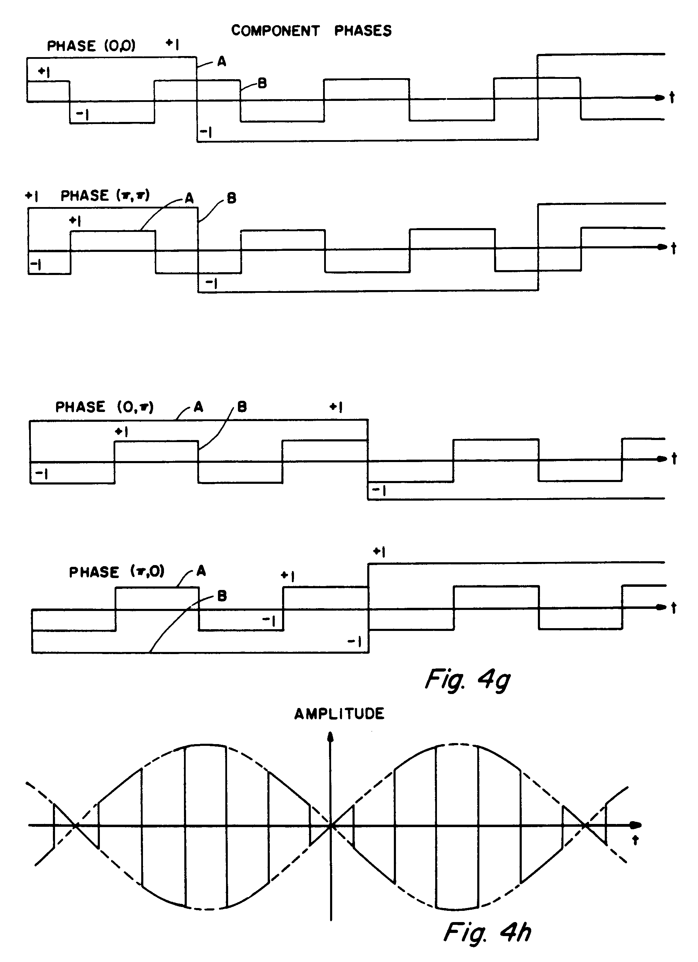

Investigation of the spectrum produced by the circuit of Figure 3 produces the line spectrum shown in figure 4e which has a desired frequency line pair a and a′ plus a host of harmonics at least 9.4 dB down from the desired pair. The line spacing is${\text{Δf = f}}_{\text{p1}} {\text{- f}}_{\text{p2}}$
and the center frequency f_{c} is the frequency of RF signal oscillator 52.

The phase of the main signal components (a and a′) is taken as (0, 0) or (180°, 180°) in synthesizing the radar signal resulting from the modulation signal of Figure 4b. The specific choice of 0° or 180° is arbitrary but must be consistent once chosen. With two major carriers there are, then, four relative phase combinations. This may be diagrammatically shown as in Figure 4f, where 0 means in-phase, and 1 means 180° out of phase.

With use of pulse generators 56 and 58, the phase relationship between the desired carrier signals having frequency difference fₚ₂-fₚ₁ can be easily controlled. The switch drive functions shown in Figure 4g can be easily generated from a reference pulse generator through standard logic elements, digital counters, flip-flops, and the like. Addition of a phase select switch allows sequential, individual, phase coding of a synthesized pair of signal carriers as determined by the pulse generator frequencies fₚ₁ and fₚ₂.

In application where the host of sidebands shown in Figure 4e is deleterious to the intended use, a sinusoidal taper may be applied as indicated in Figure 4h.

Those skilled in the art will recognize that only the preferred embodiment of the present invention is disclosed herein and that the embodiment may be altered as defined in the accompanying claims.

## Claims

1. A method for generating a radar transmitter signal in a radar altimeter system, comprising the steps of:
a) generating a radio frequency (RF) signal composed of a first and a second coexisting high frequency signal component of a first (f₁) and a second (f₂) frequency, respectively, and having a predetermined phase relation with respect to each other;
b) transmitting said radar signals;
c) receiving return signals of said transmitted signals from a target surface; and
d) processing said return signals by producing from said return signals a signal which is representative of the difference between a first return signal component of said first frequency and a second return signal component of said second frequency,
**characterized in that**
e) the output signal (f_{c}) of a radio frequency (RF) oscillator (52) is pulse-modulated by a control signal (M) corresponding to the digital product of two pulse signals (P₁, P₂) of different frequencies (fₚ₁, fₚ₂) and of a predetermined phase relation with respect to each other, wherein the frequency difference (fₚ₂ - fₚ₁) between said two pulse signals corresponds to the frequency difference (f₂ - f₁) between said first and second high frequency signal components.

2. A radar system including a transmitter signal generator suitable for performing the method of claim 1,
comprising
a) signal generating means for generating a radio frequency (RF) signal composed of a first and a second coexisting high frequency signal component of a first (f₁) and a second (f₂) frequency, respectively, and having a predetermined phase relation with respect to each other;
b) means for transmitting said radar signals;
c) means for receiving return signals of said transmitted signals from a target surface; and
d) means for processing said return signals by producing from said return signals a signal which is representative of the difference between a first return signal component of said first frequency and a second return signal component of said second frequency,
**characterized by**:
a) a radio frequency oscillator (52) providing an RF signal (f_{c});
b) a controllable bi-phase modulating switch (54) having
b1) an input for receiving said RF signal,
b2) a control input for receiving a control signal (M); and
b3) an output (62);
c) a pair of pulse generators (56, 58) for providing first and second pulse signals (P₁, P₂) of fixed phase relationship and having a first and a second repetition frequency (fₚ₁, fₚ₂), respectively wherein the frequency difference (fₚ₂ - fₚ₁) between said two pulse signals corresponds to the frequency difference (f₂ - f₁) between said first and second high frequency signal components; and
d) means (65) for obtaining a product signal representative of the product of said first and second pulse signals, said product signal providing said control signal (M).

3. The radar system of claim 2, **characterized in that** said controllable switch (54) is operative to pass said RF signal (f_{c}) to said output (62) in response to a first condition of said control signal (M), and passing said RF signal to said output (62) with 180° phase inversion in response to a second condition of said control signal.

4. The radar system of claim 2 or 3, **characterized in that** said controllable switch (54) comprises:
a) a first transmission gate (501) connected between the RF input and a summing circuit (503);
b) a second transmission gate (502) connected in series with a first inverter (505) between said RF input and said summing circuit;
c) a second inverter (507) connected between the control input (M) and a second input of the second transmission gate (502);
d) a connection between said control input (M) and a second input of the first transmission gate (501);
e) an output terminal of the summing circuit (503) connected to said output (62) of the controllable switch (54).

5. The radar system of claim 2, 3, or 4, **characterized in that** said means (65) for obtaining a product signal is an exclusive-or circuit (67).

6. A radar system according to one of the claims 2 to 5 **characterized** in that said means (32 to 44) for processing said return signals includes
a) a pair of filters (34, 36), respectively, centered at said first and second frequencies,
b) a mixer (38),
c) means to couple the output of each of said filters to said mixer,
d) a narrow band filter (42), and
e) means to couple the output of said mixer to said narrow band filter.

7. The radar system of claim 6, **characterized in that** said narrow band filter (42) has a bandwidth equal to the information bandwidth.

8. The radar system of claim 7, **characterized in that** said narrow band filter (42) has a center frequency substantially equal to the frequency difference between said first and second frequencies.

## Patentansprüche

1. Verfahren zum Erzeugen eines Radarsendesignals in einem Radarhöhenmeßsystem mit den Schritten:
a) Erzeugen eines Hochfrequenzsignals (RF), welches aus einer ersten und einer zweiten koexistenten Hochfrequenzsignalkomponente mit einer ersten (f₁) bzw. einer zweiten (f₂) Frequenz besteht, die eine vorgegebene Phasenlage zueinander haben;
b) Aussenden dieser Radarsignale;
c) Empfang der von einer Zielfläche zurückgesandten Sendesignale;
d) Verarbeiten der zurückgesandten Signale, indem aus ihnen ein Signal abgeleitet wird, welches für die Differenz zwischen einer ersten Rücksignalkomponente der ersten Frequenz und einer zweiten Rücksignalkomponente der zweiten Frequenz kennzeichnend ist;
**dadurch gekennzeichnet**, daß
e) das Ausgangssignal (f_{c}) eines Hochfrequenz-(RF)-Oszillators (52) mit einem Steuersignal (M) impulsmoduliert wird, welches dem digitalen Produkt von zwei Impulssignalen (P₁, P₂) unterschiedlicher Frequenz (fₚ₁, fₚ₂) und einer vorgegebenen relativen Phasenlage zueinander entspricht, wobei die Frequenzdifferenz (fₚ₂ - fₚ₁) zwischen diesen beiden Impulssignalen der Frequenzdifferenz (f₂ - f₁) zwischen der ersten und der zweiten Hochfrequenzsignalkomponente entspricht.

2. Radarsystem mit einem Sendesignalgenerator zur Durchführung des Verfahrens nach Anspruch 1 mit:
a) einem Signalgenerator zum Erzeugen eines Hochfrequenzsignals (RF), welches aus einer ersten und einer zweiten koexistenten Hochfrequenzsignalkomponente mit einer ersten (f₁) bzw. einer zweiten (f₂) Frequenz besteht, die eine vorgegebene Phasenlage zueinander haben;
b) einer Vorrichtung zum Aussenden dieser Radarsignale;
c) einer Einrichtung zum Empfang der von einer Zielfläche zurückgesandten Sendesignale; sowie
d) Mitteln zum Verarbeiten der rückgesandten Signale indem aus ihnen ein Signal abgeleitet wird, welches für die Differenz zwischen einer ersten Rücksignalkomponente der ersten Frequenz und einer zweiten Rücksignalkomponente der zweiten Frequenz kennzeichnend ist;
**gekennzeichnet durch**
a) einen Hochfrequenzoszillator (52) zum Erzeugen eines Hochfrequenzsignals (f_{c});
b) einen steuerbaren 2-Phasen-Modulationsschalter (54) mit:
b1) einem Eingang für das Hochfrequenzsignal,
b2) einem Steuereingang für ein Steuersignal (M), und
b3) einem Ausgang (62);
c) zwei Impulsgeneratoren (56, 58) zum Erzeugen erster und zweiter Impulssignale (P₁, P₂) von vorgegebener Phasenlage und mit einer ersten bzw. zweiten Wiederholungsfrequenz (fₚ₁, fₚ₂), wobei die Frequenzdifferenz (fₚ₂-fₚ₁) zwischen diesen beiden Impulssignalen der Frequenzdifferenz (f₂ - f₁) zwischen der ersten und der zweiten Hochfrequenzsignalkomponente entspricht; und
d) Mitteln (65) zum Erzeugen eines Produktsignals entsprechend dem Produkt der ersten und zweiten Impulssignale, welches Produktsignal das Steuersignal (M) liefert.

3. Radarsystem nach Anspruch 2, **dadurch gekennzeichnet**, daß der steuerbare Schalter (54) das Hochfrequenzsignal (f_{c}) bei einem ersten Zustand des Steuersignals (M) an den Ausgang (62) abgibt und bei einem zweiten Zustand des Steuersignals das Hochfrequenzsignal mit um 180° umgekehrter Phasenlage an den Ausgang (62) liefert.

4. Radarsystem nach Anspruch 2 oder 3, **dadurch gekennzeichnet**, daß der steuerbare Schalter (54) aufweist:
a) ein zwischen den Hochfrequenzeingang und eine Summierschaltung (503) eingeschaltetes erstes Übertragungsgatter (501);
b) ein in Reihe mit einem ersten Inverter (505) zwischen den Hochfrequenzeingang und die Summierschaltung eingeschaltetes zweites Übertragungsgatter (502);
c) einen zwischen den Steuereingang (M) und einen zweiten Eingang des zweiten Übertragungsgatters (502) eingeschalteten zweiten Inverter (507);
d) eine Verbindung zwischen dem Steuereingang (M) und einem zweiten Eingang des ersten Übertragungsgatters (501);
e) eine an den Ausgang (62) des steuerbaren Schalters (54) angeschlossene Ausgangsklemme der Summierschaltung (503).

5. Radarsystem nach Anspruch 2, 3 oder 4, **dadurch gekennzeichnet**, daß die Mittel (65) zur Erzeugung eines Produktsignals aus einem Exklusiv-ODER-Schaltkreis (67) bestehen.

6. Radarsystem nach einem der Ansprüche 2 bis 5, **dadurch gekennzeichnet**, daß die Mittel (32 - 44) zur Verarbeitung der zurückgesandten Signale umfassen:
a) zwei Filter (34, 36), deren Mittenfrequenz auf den ersten und zweiten Frequenzen liegt;
b) eine Mischstufe (38);
c) Mittel zum Anschluß des Ausgangs jedes der beiden Filter an die Mischstufe;
d) ein Schmalbandfilter (42), und
e) Mittel zum Anschluß des Mischerausgangs an das Schmalbandfilter.

7. Radarsystem nach Anspruch 6, **dadurch gekennzeichnet**, daß das Schmalbandfilter (42) eine Bandbreite gleich der Informationsbandbreite aufweist.

8. Radarsystem nach Anspruch 7, **dadurch gekennzeichnet**, daß das Schmalbandfilter (42) eine Mittenfrequenz aufweist, welche praktisch gleich der Frequenzdifferenz zwischen den ersten und zweiten Frequenzen ist.

## Revendications

1. Procédé de génération d'un signal d'émetteur radar dans un système altimétrique à radar, comportant les étapes consistant à:
a) générer un signal radiofréquence (RF) composé d'une première et d'une deuxième composante de signal haute fréquence qui coexistent d'une première fréquence (f₁) et d'une deuxième fréquence (f₂), respectivement, et ayant une relation de phase prédéterminée l'une par rapport à l'autre;
b) émettre lesdits signaux radar;
c) recevoir en provenance d'une surface cible des signaux de retour desdits signaux émis; et
d) traiter lesdits signaux de retour en produisant à partir desdits signaux de retour un signal qui est représentatif de la différence entre une première composante de signal de retour de ladite première fréquence et une deuxième composante de signal de retour de ladite deuxième fréquence,
caractérisé en ce que
e) le signal de sortie (f_{c}) d'un oscillateur radiofréquence (RF) (52) est modulé par impulsions par un signal de commande (M) correspondant au produit numérique de deux signaux impulsionnels (P₁, P₂) de fréquences différentes (fₚ₁, fₚ₂) et d'une relation de phase prédéterminée l'une par rapport à l'autre, la différence de fréquence (fₚ₂ - fₚ₁) entre les deux signaux impulsionnels correspondant à la différence de fréquence (f₂ - f₁) entre lesdites première et deuxième composantes de signal haute fréquence.

2. Système radar comprenant un générateur de signal d'émetteur adapté à la mise en oeuvre du procédé de la revendication 1, comportant:
a) des moyens de génération de signal destinés à générer un signal radiofréquence (RF) composé d'une première et d'une deuxième composante de signal haute fréquence qui coexistent d'une première fréquence (f₁) et d'une deuxième fréquence (f₂), respectivement, et ayant une relation de phase prédéterminée l'une par rapport à l'autre;
b) des moyens destinés à émettre lesdits signaux radar;
c) des moyens destinés à recevoir en provenance d'une surface cible des signaux de retour desdits signaux émis; et
d) des moyens destinés à traiter lesdits signaux de retour en produisant à partir desdits signaux de retour un signal qui est représentatif de la différence entre une première composante de signal de retour de ladite première fréquence et une deuxième composante de signal de retour de ladite deuxième fréquence,
caractérisé par:
a) un oscillateur (52) radiofréquence fournissant un signal RF (f_{c});
b) un commutateur de modulation à deux phases pouvant être commandé (54) ayant
b1) une entrée destinée à recevoir ledit signal RF,
b2) une entrée de commande à recevoir un signal de commande (M); et
b3) une sortie (62);
c) une paire de générateurs d'impulsions (56, 58) destinée à délivrer des premier et deuxième signaux impulsionnels (P₁, P₂) d'une relation de phase fixe et ayant une première et une deuxième fréquence de répétition (fₚ₁, fₚ₂) respectivement, la différence de fréquence (fₚ₂ - fₚ₁) entre les deux signaux impulsionnels correspondant à la différence de fréquence (f₂ - f₁) entre lesdites première et deuxième composantes de signal haute fréquence; et
d) des moyens (65) destinés à obtenir un signal de produit représentatif du produit desdits premier et deuxième signaux impulsionnels, ledit signal de produit fournissant ledit signal de commande (M).

3. Système radar selon la revendication 2, caractérisé en ce que ledit commutateur pouvant être commandé (54) fonctionne de façon à laisser passer ledit signal RF (f_{c}) vers ladite sortie (62) en réponse à un premier état dudit signal de commande (M), et à laisser passer ledit signal RF vers ladite sortie (62) avec une inversion de phase de 180° en réponse à un deuxième état dudit signal de commande.

4. Système radar selon la revendication 2 ou 3, caractérisé en ce que ledit commutateur pouvant être commandé (54) comporte:
a) une première porte d'émission (501) reliée entre l'entrée RF et un circuit de sommation (503);
b) une deuxième porte d'émission (502) reliée en série avec un premier inverseur (505) entre ladite entrée RF et ledit circuit de sommation;
c) un deuxième inverseur (507) relié entre l'entrée de commande (M) et une deuxième entrée de la deuxième porte d'émission (502);
d) une liaison entre l'entrée de commande (M) et une deuxième entrée de la première porte d'émission (501);
e) une borne de sortie du circuit de sommation (503) reliée à ladite sortie (62) du commutateur pouvant être commandé (54).

5. Système radar selon la revendication 2, 3 ou 4, caractérisé en ce que lesdits moyens (65) destinés à obtenir un signal de produit sont constitués par un circuit OU EXCLUSIF (67).

6. Système radar selon l'une quelconque des revendications 2 à 5, caractérisé en ce que lesdits moyens (32 à 44) destinés à traiter lesdits signaux de retour comprennent
a) une paire de filtres (34, 36), respectivement, centrés sur lesdites première et deuxième fréquences,
b) un mélangeur (38),
c) des moyens destinés à relier la sortie de chacun desdits filtres audit mélangeur,
d) un filtre à bande étroite (42), et
e) des moyens destinés à relier la sortie dudit mélangeur audit filtre à bande étroite.

7. Système radar selon la revendication 6, caractérisé en ce que ledit filtre à bande étroite (42) a une bande passante égale à la bande passante d'information.

8. Système radar selon la revendication 7, caractérisé en ce que ledit filtre à bande étroite (42) a une fréquence centrale sensiblement égale à la différence de fréquence entre lesdites première et deuxième fréquences.
